# EUROPÄISCHE PATENTSCHRIFT

(11) **EP 3 659 977 B1**
(45) Veröffentlichungstag und Bekanntmachung des Hinweises auf die Patenterteilung: **15.12.2021**
(21) Anmeldenummer: 18208440.0
(22) Anmeldetag: 27.11.2018
(51) Int. Cl.: C02F 1/34, B01F 5/06, B01F 13/10, B01F 5/00, B01F 5/02

(54) **EINRICHTUNG ZUM BEHANDELN VON FLÜSSIGKEITEN MITTELS HYDROMECHANISCHER KAVITATION UND UNTERDRUCK**
DEVICE FOR THE TREATMENT OF LIQUIDS BY MEANS OF HYDROMECHANICAL CAVITATION AND VACUUM
DISPOSITIF DE TRAITEMENT DES LIQUIDES PAR CAVITATION HYDROMÉCANIQUE ET SOUS-COMPRESSION

(43) Veröffentlichungstag der Anmeldung: 03.06.2020
(73) Patentinhaber: Steinhardt GmbH, 65232 Taunusstein (DE)
(72) Erfinder:
(74) Vertreter: Franke, Markus

(56) Entgegenhaltungen:
- EP-A1- 1 294 474
- WO-A1-2010/079523
- WO-A2-2012/003815
- US-A1- 2012 097 280

## Beschreibung

Die Erfindung betrifft eine Einrichtung zum Behandeln von Flüssigkeiten mittels hydromechanischer Kavitation und Unterdruck, wobei die Einrichtung eine Wirbelkammer zum rotierenden Durchleiten der in einem Zulauf der Wirbelkammer unter Druck stehenden Flüssigkeit und einen sich in Durchströmungsrichtung der Flüssigkeit an die Wirbelkammer anschließenden, einen Durchtrittskanal aufweisenden Strömungskörper zur Erzeugung von Kavitation und Unterdruck aufweist, wobei der Strömungskörper einen sich in der Durchströmungsrichtung der Flüssigkeit durch den Strömungskörper im Querschnitt verjüngten Abschnitt und einen sich an diesen Abschnitt anschließenden, im Querschnitt erweiternden Abschnitt aufweist.

Eine solche Einrichtung dient beispielsweise dem Zweck, vorhandenes Wasser so zu behandeln, dass es nahezu keimfrei ist und Trinkwasserqualität erreicht. In die Wirbelkammer, ähnlich einer Zentrifuge, wird mittels einer vorgeschalteten Hochdruckpumpe Wasser mit einem definierten Vordruck gepumpt. Dieser Vordruck beträgt insbesondere 4.0 bar bis 5.0 bar. Innerhalb der Wirbelkammer werden, konstruktionsbedingt, hohe Rotationsgeschwindigkeiten, insbesondere größer 30 m/s, ferner Kavitation und Unterdruck erzeugt. In dem sich unmittelbar an die Wirbelkammer anschließenden Strömungskörper erfolgt zudem eine gezielte Entspannung des rotierenden Wassers. Es entsteht ein Unterdruck von ca. -1.0 bar. Kavitation und Unterdruck zerstören mechanisch jegliche Mikrobiologie und alle Legionellen-Bakterien und bauen vorhandene Biofilm-Beläge in den wasserführenden Anlagenteilen verlässlich ab. Zudem entstehen beim Kavitationsprozess sogenannte Hydroxyl-Radikale, welche die Mikrobiologie zusätzlich auf natürliche Weise rückstandsfrei oxidieren.

Mittels einer solchen Einrichtung ist es auch möglich, die Oberflächenspannung und die Viskosität bei Wasser und allen wässrigen Fluiden, so zum Beispiel bei Wasser, Prozesswasser, Waschlaugen, Reinigungslaugen und allen Flüssigkeiten und flüssigen Mischungen, welche einen überwiegenden Wasseranteil aufweisen, zu reduzieren.

Mittels einer solchen Einrichtung ist es auch möglich, Kühlschmieremulsionen, die im Bearbeitungsmaschinen (Zerspannen/Fräsen/Schneiden/Bohren/Drehen/ Schleifen von Metallen) der zerspanenden Metall verarbeitenden und/oder Metall bearbeitenden Industrie eingesetzt werden, dahingehend zu behandeln und zu pflegen, dass Mikrobiologie (Bakterien, Pilze, Hefen, Viren) zerstört wird, Fremd-ölanteile abgebaut werden, Schmutzaustrag erhöht wird, die Bearbeitungsqualität der Emulsion verbessert wird und die Standzeit der Emulsion verlängert wird.

Eine Einrichtung der eingangs genannten Art, die die Merkmale des Oberbegriff des Patentanspruchs 1 aufweist, ist aus der DE 20 2017 003 049 U1 bekannt.

Einrichtungen, die dem Zweck dienen, vorhandenes Wasser zu behandeln oder die Oberflächenspannung und die Viskosität bei Wasser und allen wässrigen Gebieten zu reduzieren oder Kühlschmieremulsionen zu behandeln und zu pflegen sind aus der DE 20 2018 002 663 U1,der DE 20 2018 002 660 U1 und der DE 20 2018 002 661 U1 bekannt.

In der DE 102 58 898 A1 ist ein Verfahren und eine Vorrichtung zur Aktivierung von Mikroorganismen unter Verwendung eines Kavitationsgenerators beschrieben. Hierbei wird ein hohes Kavitationsenergiepotenzial in die Flüssigkeit eingetragen und es erfolgt eine Behandlung der Flüssigkeit mittels systemeigener Ultraschallschwingungen. Der Kavitationsgenerator ist nach dem Rotor-Stator-Prinzip aufgebaut und ist an sich gegenüberliegenden Arbeitsflächen des Rotors und des Stadttors mit unterschiedlichen Profilierungen, Abrisskanten sowie Längsnuten ausgestaltet. Die Anzahl, die Form und die Tiefe der Nuten in den Arbeitsflächen des Rotors und des Stators sind so gewählt, dass Druckimpulse mit einer Schwingfrequenz im Bereich von 1-100 kHz entstehen.

In der DE 10 2009 034 977 A1 ist ein Kavitationsreaktor sowie ein Verfahren zur hydrodynamischen Erzeugung homogener, oszillierenden Kavitationsblasen in einem Fluid beschrieben. Hierbei findet eine quer zur Strömungsrichtung angeordnete Blende mit einer Vielzahl von zur Erzeugung von Kavitationsblasen ausgebildeten Mikrodurchlässen Verwendung. Das Fluid wird geradlinig, nicht umgelenkt durch den Kavitationsreaktor geleitet.

In der EP 3 085 670 A1 ist eine Einrichtung zum Behandeln von Wasser mittels hydrodynamischer Kavitation und Ultraschallwellen beschrieben. Diese Einrichtung weist eine Blendenanordnung auf. Das Wasser wird geradlinig, nicht umgelenkt durch die Einrichtung geleitet.

Eine Einrichtung, die die Merkmale des Oberbegriffs des Patentanspruchs 1 aufweist, ist zudem aus der EP 1 294 474 A1 bekannt.

Die US 2012/097280 A1 offenbart weiteren Stand der Technik.

Aufgabe der vorliegenden Erfindung ist es, eine Einrichtung, die die Merkmale des Oberbegriffs des Patentanspruch 1 aufweist, so weiterzubilden, dass eine hocheffiziente Behandlung der Flüssigkeit durch hydromechanische Kavitation und Unterdruck erfolgen kann.

Gelöst wird diese Aufgabe durch eine Einrichtung, die gemäß den Merkmalen des Patentanspruchs 1 ausgebildet ist.

Die Einrichtung dient somit zum Behandeln von Flüssigkeiten mittels hydromechanischer Kavitation und Unterdruck. Sie weist eine Wirbelkammer zum rotierenden Durchleiten der in einem Zulauf der Wirbelkammer unter Druck stehenden Flüssigkeit und einen sich in Durchströmungsrichtung der Flüssigkeit an die Wirbelkammer anschließenden, einen Durchtrittskanal aufweisenden Strömungskörper zur Erzeugung von Kavitation und Unterdruck auf. Der Strömungskörper weist einen sich in der Durchströmungsrichtung der Flüssigkeit durch den Strömungskörper im Querschnitt verjüngenden Abschnitt und einen sich an diesen Abschnitt anschließenden, im Querschnitt erweiternden Abschnitt auf. Die Erweiterung des sich erweiternden Abschnitts erfolgt entlang mindestens einer Stufe. Bei einer alternativen Gestaltung, die nicht vom Schutzbereich des Patentanspruchs 1 umfasst ist, erfolgt die Erweiterung des sich erweiternden Abschnitts anstatt entlang mindestens einer Stufe entlang einer Kurve mit mindestens einem Wendepunkt.

Überraschenderweise hat sich gezeigt, dass bei einer derartigen Ausbildung des sich erweiternden Abschnitts des Strömungskörpers, somit der Entspannungskomponente des Strömungskörpers, besonders ausgeprägte, für die hydromechanische Kavitation verantwortliche Schwingungen innerhalb der Flüssigkeit entstehen, die von tiefen Frequenzen über mittlere Frequenzen bis zu hohen Frequenzen reichen. Je nach Ausbildung der Kurve mit dem mindestens einen Wendepunkt, insbesondere der Kurve mit mehreren Wendepunkten, oder der Ausbildung einer oder mehrerer Stufen können unterschiedlichen Frequenzbereiche im erweiternden Abschnitt erzeugt werden. Hierdurch kann die Flüssigkeit sehr effizient durch Unterdruck und Kavitation optimal behandelt werden. Insbesondere können die Zellmembranen von Bakterien mechanisch aufgebrochen werden, mit der Konsequenz der Zerstörung der Bakterien.

Es wird davon ausgegangen, dass eine nicht laminare, sondern turbulente Strömung durch die Ausbildung der Kurve mit dem mindestens einen Wendepunkt oder die mindestens eine Stufe im erweiternden Abschnitt erzeugt wird, und dies die hocheffiziente Behandlung der Flüssigkeit ermöglicht.

Vorzugsweise ist ein einen Durchtrittskanal durch den Strömungskörper bildender Wandungsbereich von sich erweiterndem Abschnitt und/oder sich verjüngendem Abschnitt rotationssymmetrisch zu einer Achse des Strömungskörpers angeordnet. Die Kontur der Kurve mit dem mindestens einen Wendepunkt oder die Kontur der mindestens einen Stufe ergibt sich somit in einem Schnitt senkrecht zum Wandungsbereich des Durchtrittskanals, in Durchtrittsrichtung der Flüssigkeit durch den erweiternden Bereich des Strömungskörpers geschnitten.

Insbesondere sind die Wandungsbereiche von sich erweiterndem Abschnitt und sich verjüngendem Abschnitt rotationssymmetrisch zu derselben Achse des Strömungskörpers angeordnet. Bezogen auf die Wandungsbereiche ist der Strömungskörper somit insgesamt rotationssymmetrisch gestaltet. Dies ermöglicht eine einfache und effiziente Herstellung des Strömungskörpers, bei gleichzeitig effizienter Wirkungsweise des Strömungskörpers.

Erfindungsgemäß ist vorgesehen, dass sich der erweiternde Abschnitt stromabwärts der mindestens einen Stufe konisch erweitert. In diesem stromabwärtigen Bereich ist somit nicht mehr vorgesehen, die Ausbildung eines veränderten Frequenzbereichs im Strömungskörper anzuregen. In diesem stromabwärtigen Bereich, somit insbesondere einem Bereich benachbart dem Auslaufbereich des Strömungskörpers, stellt sich wieder ein gegen über dem Unterdruck höherer Druck ein.

Gemäß einer besonderen Weiterbildung der Erfindung ist vorgesehen, dass die Verjüngung des sich verjüngenden Abschnitts entlang einer Kurve oder entlang mindestens einer Stufe erfolgt. Hierbei ist es nicht notwendig, dass die Kurve einen Wendepunkt aufweist. Insbesondere ist der sich verjüngende Abschnitt, in der Durchströmungsrichtung der Flüssigkeit gesehen, konisch verjüngt ausgebildet. Alternativ ist insbesondere vorgesehen, dass die Verjüngung entlang mehrerer Stufen erfolgt. Vorzugsweise erfolgt die Verjüngung entlang 2-4 Stufen, insbesondere entlang 3 Stufen.

Die mindestens eine Stufe in dem sich verjüngenden Abschnitt des Strömungskörpers bewirkt ein Pulsieren der dort durch den Strömungskörper geleiteten Flüssigkeit. Durch mehrere Stufen in diesem Abschnitt kann eine intensivere Pulsierung erzeugt werden, wobei durch die Ausbildung der Stufe und damit die Ausbildung eines Störelements im durchströmten Bereich des sich verjüngenden Abschnitts des Strömungskörpers die Pulsation optimiert werden kann. Damit einher geht eine Optimierung der Kavitation. Es ist davon auszugehen, dass die Ausbildung einer oder mehrerer Störelemente durch die eine Stufe oder die mehreren Stufen in dem sich verjüngenden Abschnitt des Strömungskörpers die Strömung im sich erweiternden Abschnitt des Strömungskörpers unter dem Aspekt der Kavitation positiv beeinflusst.

Vorzugsweise ist der Wandungsbereich des Strömungskörpers, der der durch den Strömungskörper fließenden Flüssigkeit zugewandt ist, im Bereich der jeweiligen Stufe parallel und senkrecht zur Rotationsachse angeordnet. Die durch den Strömungskörper fließenden Flüssigkeit stößt somit nach dem Durchgang durch die Wirbelkammer rotierend senkrecht auf den senkrecht zur Rotationsachse angeordneten Schenkel der Stufe und strömt dann zwischen dem parallel zur Rotationsachse angeordneten entlang einer Kreisbahn angeordneten Schenkel der Stufe hindurch.

Insbesondere ist vorgesehen, dass Abstände von in Durchströmungsrichtung der Flüssigkeit durch den Strömungskörper aufeinanderfolgenden Stufen, in Durchströmungsrichtung gleich oder in Durchströmungsrichtung zunehmend oder in Durchströmungsrichtung abnehmend sind. Durch die unterschiedlichen Abstände der Stufen kann auf die durch den Strömungskörper strömende Flüssigkeit mit den vorstehend erörterten Effekten eingewirkt werden, wobei dies sowohl die Stufen in dem sich verjüngten Abschnitt des Strömungskörpers, als auch die Stufen in dem sich erweiternden Abschnitt des Strömungskörpers betrifft.

Insbesondere ist vorgesehen, dass die Tiefe bzw. radiale Erstreckung von in Durchströmungsrichtung der Flüssigkeit durch den Strömungskörper aufeinanderfolgenden Stufen des sich verjüngenden Abschnitts in gleichem Maße abnehmend oder in kleinerem Maße abnehmend ist. Der Stufensprung ist somit gleichbleibend oder in Strömungsrichtung der Flüssigkeit durch den Strömungskörper abnehmend.

Insbesondere ist vorgesehen, dass mindestens eine bezüglich des Durchtrittskanals stromabwärtige Stufe des sich verjüngten Abschnitts einen entgegen der Durchströmungsrichtung gerichteten Vorsprung aufweist, der die benachbarte dieser Stufe angeordnete stromaufwärtige Stufe überlappt. Nicht nur die Stufengestaltung, sondern insbesondere die Ausbildung der Stufe mit dem Vorsprung führt zum Erzeugen von Sekundärströmungen mit der Konsequenz einer besonders ausgeprägten Kavitation. Insbesondere ist der Vorsprung umlaufend. Er ist somit bezüglich der Achse des Strömungskörpers umlaufend.

Die Einrichtung ist gemäß einer ersten bevorzugten grundsätzlichen Gestaltung derart ausgebildet, dass sie eine oder mehrere Zulauföffnungen zur Wirbelkammer und eine Auslauföffnung aus dem Strömungskörper auf abgewandten Seiten der Einrichtung aufweist. Über diese Zulauföffnungen gelangt die Flüssigkeit insbesondere tangential in die Wirbelkammer, sodass bereits beim Einleiten der Flüssigkeit in die Wirbelkammer, unabhängig von der Gestaltung der Wirbelkammer, eine Rotation der Flüssigkeit in der Wirbelkammer vorliegt. Insbesondere durch eine trichterförmige Gestaltung der Wirbelkammer, die sich zum Strömungskörper hin verjüngt, erfolgt die intensive Rotation der Flüssigkeit in der Wirbelkammer. Die Flüssigkeit bzw. der Volumenstrom rotiert vom Eingang der Wirbelkammer zum Ausgang der Wirbelkammer, aufgrund der kegelförmigen Innenkontur der Wirbelkammer bzw. des Reaktorraums im Ausgangsbereich des Reaktorraums mit einer sehr hohen Rotationsgeschwindigkeit aufgrund des Zyklon-Prinzips. Die Rotationsgeschwindigkeit der Flüssigkeit im Ausgang der Wirbelkammer zum Strömungskörper kann dabei durchaus 30 m/s betragen. Die rotierende Flüssigkeit gelangt vom Ausgang unmittelbar in den Strömungskörper. Hierbei wird die rotierende Flüssigkeit im Ausgang vorzugsweise umgelenkt und wegen der Gestaltung des Strömungskörpers auch in diesen umgelenkt.

Die Einrichtung ist gemäß einer zweiten bevorzugten grundsätzlichen Gestaltung derart ausgebildet, dass eine oder mehrere Zulauföffnungen zur Wirbelkammer und eine Auslauföffnung aus dem Strömungskörper auf derselben Seite der Einrichtung angeordnet sind. Das Wirkprinzip dieser Gestaltung entspricht im Wesentlichen der vorstehend erörterten ersten Gestaltung, mit dem Unterschied, dass die rotierende Flüssigkeit im Verbindungsbereich von Wirbelkammer und Strömungskörper so umgelenkt wird, sodass die Flüssigkeit aus dem Strömungskörper auf derselben Seite der Einrichtung austritt wie die in die Wirbelkammer eintretende Flüssigkeit.

Vorteilhaft besteht die Einrichtung unabhängig von deren konkreten Gestaltung aus ausschließlich stationären Teilen, somit Teilen, die nicht zueinander beweglich sind. Vorteilhaft ist der Reaktorraum frei von Komponenten, die ein freies Rotieren der Flüssigkeit in dem dem Strömungskörper zugewandten Bereich des Reaktorraums behindern würden.

Weitere Merkmale der Erfindung sind in den Unteransprüchen, der Beschreibung der nachfolgenden Zeichnung und der Zeichnung selbst dargestellt, wobei bemerkt wird, dass alle Einzelmerkmale und alle Kombinationen von Einzelmerkmalen erfindungswesentlich sind.

In der Zeichnung ist die Erfindung anhand mehrerer Ausführungsbeispiele dargestellt, ohne auf diese beschränkt zu sein. Es zeigt:
- Figur 1: eine Ansicht einer Einrichtung zum Behandeln von Flüssigkeiten mittels hydromechanischer Kavitation und Unterdruck, wobei bei der Einrichtung eine Zulauföffnung zu einer Wirbelkammer und eine Auslauföffnung aus der Wirbelkammer auf abgewandten Seiten der Einrichtung angeordnet sind, gemäß der Ansicht I in Figur 2,
- Figur 2: eine Ansicht der Einrichtung gemäß Pfeil II in Figur 1,
- Figur 3: einen Schnitt durch die Einrichtung gemäß der Schnittlinie III-III in Figur 1,
- Figur 4: einen Schnitt durch die Einrichtung gemäß der Schnittlinie IV-IV in Figur 2,
- Figur 5: eine vergrößerte Schnittdarstellung des in Figur 4 gezeigten Strömungskörpers (gemäß der Schnittlinie V-V in Figur 6),
- Figur 6: eine Ansicht des Strömungskörpers gemäß Pfeil VI in Figur 5,
- Figur 7: eine vergrößerte Darstellung eines alternativen Strömungskörpers, ohne endseitige Außengewinde veranschaulicht, in einer Schnittdarstellung gemäß der Linie VII-VII in Figur 8,
- Figur 8: eine Ansicht des Strömungskörpers gemäß Pfeil VIII in Figur 7,
- Figur 9: eine vergrößerte Darstellung eines alternativen Strömungskörpers, ohne endseitige Außengewinde veranschaulicht, in einer Schnittdarstellung gemäß der Linie IX-IX in Figur 10,
- Figur 10: eine Ansicht des Strömungskörpers gemäß Pfeil X in Figur 9,
- Figur 11: eine vergrößerte Darstellung eines alternativen Strömungskörpers, ohne endseitige Außengewinde veranschaulicht, in einer Schnittdarstellung gemäß der Linie XI-XI in Figur 12,
- Figur 12: eine Ansicht des Strömungskörpers gemäß Pfeil XII in Figur 11,
- Figur 13: eine vergrößerte Darstellung eines alternativen Strömungskörpers, ohne endseitige Außengewinde veranschaulicht, in einer Schnittdarstellung gemäß der Linie XIII-XIII in Figur 14,
- Figur 14: eine Ansicht des Strömungskörpers gemäß Pfeil XIV in Figur 13,
- Figur 15: eine vergrößerte Darstellung eines alternativen Strömungskörpers, ohne endseitige Außengewinde veranschaulicht, in einer Schnittdarstellung gemäß der Linie XV-XV in Figur 16,
- Figur 16: eine Ansicht des Strömungskörpers gemäß Pfeil XVI in Figur 15,

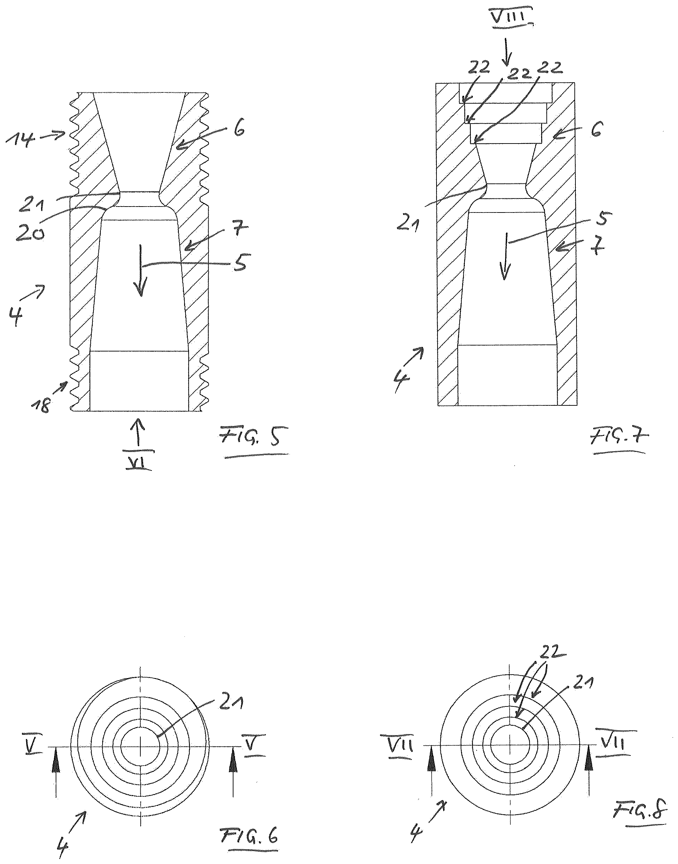

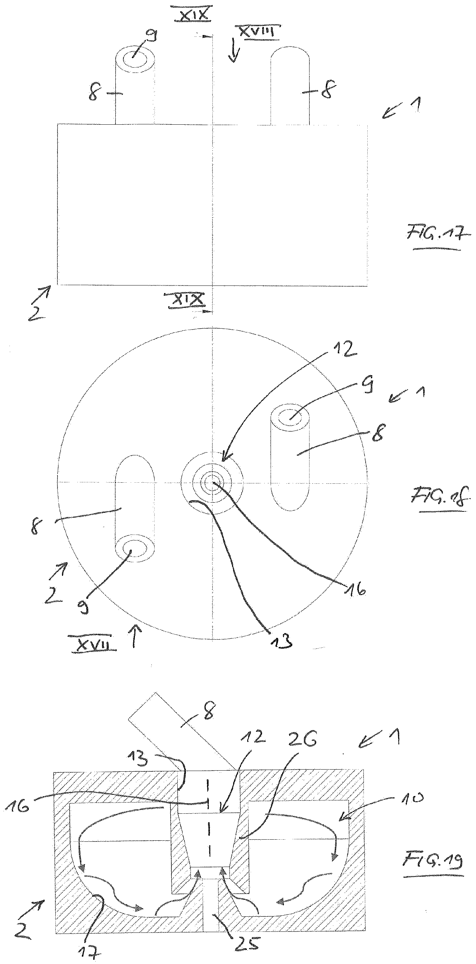

- Figur 17: eine Ansicht einer alternativen Einrichtung zum Behandeln von Flüssigkeiten mittels hydromechanischer Kavitation und Unterdruck, wobei diese Einrichtung nur im Bereich der Wirbelkammer dargestellt ist, mit zwei Zulauföffnungen zur Wirbelkammer und einer Auslauföffnung aus der Wirbelkammer, wobei in die Wirbelkammer, im Bereich der Auslauföffnung, ein Strömungskörper, der gemäß einem der in den Figuren 5-15 gezeigten Ausführungsbeispiele ausgebildet ist, einschraubbar ist, wobei die Zulauföffnungen und die Auslauföffnung der Wirbelkammer auf derselben Seite der Einrichtung angeordnet sind, gemäß der Ansicht XVII in Figur 18,
- Figur 18: eine Ansicht der Wirbelkammer gemäß Pfeil XVIII in Figur 17,
- Figur 19: einen Schnitt durch die Wirbelkammer gemäß der Schnittlinie XIX-XIX in Figur 17.

### Figurenbeschreibung

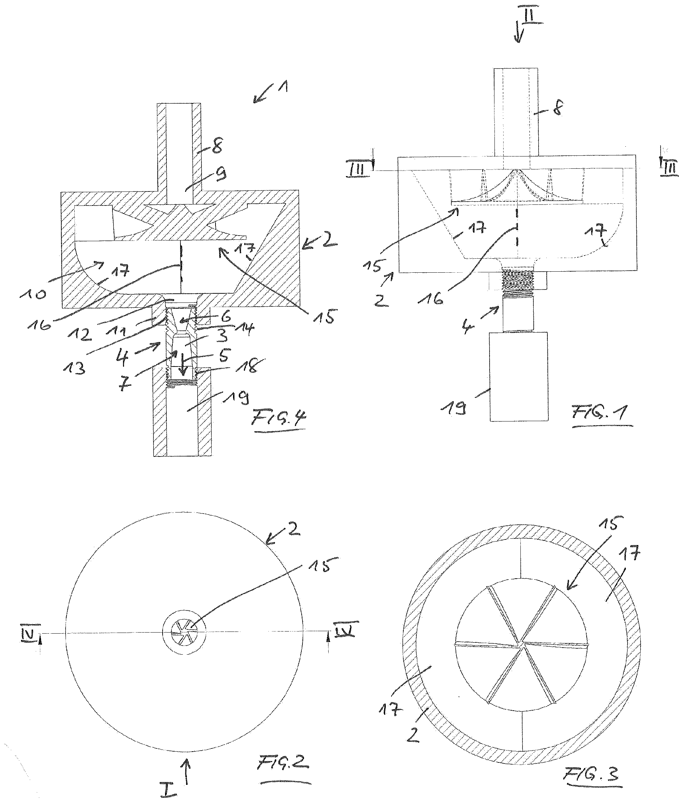

Die Figuren 1-4 zeigen eine Einrichtung 1 zum Behandeln von Wasser, sodass es nahezu keimfrei ist und Trinkwasserqualität erreicht. Die Verkeimung des Wassers wird mittels der Einrichtung 1 beseitigt. Durch Unterdruck und Kavitation werden die Zellen der im Wasser befindlichen Bakterien mechanisch aufgeschlossen und zerstört.

Die Einrichtung 1 weist eine Wirbelkammer 2 zum rotierenden Durchleiten der Flüssigkeit und einen sich in Durchströmungsrichtung der Flüssigkeit an die Wirbelkammer 2 anschließenden, einen Durchtrittskanal 3 aufweisenden Strömungskörper 4 zur Erzeugung von Kavitation und Unterdruck auf. Der Strömungskörper 4 weist einen sich in der Durchströmungsrichtung 5 der Flüssigkeit durch den Strömungskörper 4 im Querschnitt verjüngenden Abschnitt 6 und einen sich an diesen Abschnitt 6 anschließenden, im Querschnitt erweiternden Abschnitt 7 auf.

Die Wirbelkammer 2 weist einen Einlassstutzen 8 mit Zulauföffnung 9, einen im Inneren der Wirbelkammer 2 gebildeten Reaktorraum 10 und einen Auslassstutzen 11 mit Auslassöffnung 12 auf. Der Auslassstutzen 11 ist mit einem Innengewinde 13 versehen. In das Innengewinde 13 des Auslassstutzens 11 ist der Strömungskörper 4 im Bereich eines Außengewindes 14 eingeschraubt. Die Wirbelkammer 2 ist im Bereich des Einlaufstutzens 8 mit einer Strömungsplatte 15 versehen, die die über den Einlassstutzen 8 in die Wirbelkammer 2 einströmende Flüssigkeit nach radial außen sowie hierzu überlagert tangential in derselben Richtung umleitet, sodass die Flüssigkeit im Reaktorraum 10 um eine zentrale Achse 16 des Reaktorraums 10 rotiert. Hierbei nimmt die Rotationsgeschwindigkeit der Flüssigkeit von der Strömungsplatte 15 in Richtung des Auslassstutzens 11 zu, aufgrund der sich zum Auslassstutzen 11 hin verjüngten Ausbildung des Reaktorraums 10 bzw. der Wirbelkammer 2. Veranschaulicht sind in den Figuren 1 und 4 jeweils zwei unterschiedliche Varianten von Wandungsabschnitten 17 der Wirbelkammer 2 im Bereich des Reaktorraums 10. Die Wirbelkammer 2 weist bei der einen Variante (siehe Fig. 4, rechter Bereich) einen Wandungsabschnitt 17 auf, der sich konisch zum Auslassstutzen 11 hin verjüngt. Bei der anderen Variante (siehe Fig. 4, linker Bereich) weist die Wirbelkammer 2 einen Wandungsabschnitt 17 auf, der sich entlang einer Kurve verjüngt. Mittels der Wirbelkammer 2 lässt sich eine hohe Rotationsgeschwindigkeit der durch die Wirbelkammer 2 geleiteten Flüssigkeit erzeugen, insbesondere eine Rotationsgeschwindigkeit, die >30 m/s ist. Über die Zulauföffnung 9 wird Flüssigkeit in den Reaktorraum 10 mit einem Druck von 4.0-5.0 bar eingeleitet. Innerhalb des Reaktorraums 10 werden, konstruktiv bedingt, die genannte Rotationsgeschwindigkeit, ferner Kavitation und Unterdruck erzeugt. In dem anschließenden Strömungskörper 4 wird eine gezielte Entspannung der Flüssigkeit herbeigeführt. Es entsteht ein Unterdruck von ca. -1.0 bar. Der Auslaufdruck nach dem Strömungskörper 4 beträgt nur noch maximal +1.0 bar.

Im Bereich des stromabwärtigen Endes ist der Strömungskörper 4 mit einem Außengewinde 18 versehen, das in ein Innengewinde eines Rohrs 19 eingeschraubt ist. Durch dieses Rohr 19 erfolgt die Ableitung der keimfreien Flüssigkeit.

Die Figuren 5 und 6 veranschaulichen die Ausbildung des Strömungskörpers 4, wobei dieser gemäß einem ersten Ausführungsbeispiel ausgebildet ist, in vergrößerter Darstellung. Veranschaulicht ist, dass der Strömungskörper 4 den sich in der Durchströmungsrichtung 5 der Flüssigkeit durch den Strömungskörper 4 im Querschnitt verjüngten Abschnitt 6 und den sich an diesen Abschnitt 6 anschließenden, im Querschnitt erweiternden Abschnitt 7 aufweist. Hierbei verjüngt sich der Abschnitt 6 konisch, bis zur Engstelle 21 des Durchtrittskanals 3 des Strömungskörpers 4. In diesem Bereich ist der Durchtrittskanal 3 somit kegelstumpfförmig ausgebildet. Im Anschluss an die maximal verjüngte Engstelle 21 des Durchtrittskanals 3 erweitert sich der Abschnitt 7 dahingehend, dass die Erweiterung entlang einer Kurve 20 mit mindestens einem Wendepunkt erfolgt. Von der Engstelle 21 ausgehend verändert sich der Querschnitt somit S-förmig und bildet damit den einen Wendepunkt der Kurve 20. Hieran anschließend erweitert sich der Abschnitt 7 konisch, bildet in diesem Bereich, der, bezogen auf die Längserstreckung des Strömungskörpers 4, bis auf Höhe des Außengewindes 18 reicht, die Form eines Kegelstumpfes aus. Hieran schließt sich ein kreiszylindrischer Abschnitt an. Abgesehen von den Außengewinden 14 und 18 ist der Strömungskörper 4 rotationssymmetrisch ausgebildet.

Kavitation und Unterdruck im Strömungskörper 4 zerstören mechanisch jegliche Mikrobiologie und alle Legionellen-Bakterien in der Flüssigkeit bzw. im Wasser und bauen vorhandene Biofilm-Beläge in wasserführenden Anlageteilen verlässlich ab. Zudem entstehen beim Kavitationsprozess sogenannte Hydroxyl-Radikale, welche die Mikrobiologie zusätzlich auf natürliche Weise rückstandsfrei oxidieren.

Das in den Figuren 7 und 8 veranschaulichte zweite Ausführungsbeispiel des Strömungskörpers 4 unterscheidet sich von dem in den Figuren 5 und 6 gezeigten ersten Ausführungsbeispiel nur durch die modifizierte Gestaltung des sich im Querschnitt verjüngenden Abschnitts 6 des Strömungskörpers 4. Dieser ist teilweise stufenförmig ausgebildet. Es sind, bezogen auf die Durchströmungsrichtung 5, in etwa in der ersten halben Länge des sich im Querschnitt verjüngten Abschnitts 6 drei Stufen 22 vorgesehen, womit sich der Querschnitt des Abschnitts 6 in drei Stufen verjüngt. An die dritte Stufe 22 schließt sich ein sich konisch verjüngender Teilbereich des Abschnitts 6 an. Die Stufen 22 haben dieselbe Stufenhöhe, in Durchströmungsrichtung 5 gesehen, und auch denselben Stufensprung, in radialer Richtung des Strömungskörpers 4 gesehen. Es werden hierdurch durch die drei Stufen drei Kreiszylinder im Inneren des Strömungskörpers gebildet, wobei der größte Kreiszylinder oberstromig angeordnet ist, der mittelgroße Kreiszylinder in der Mitte angeordnet ist und der kleinste Kreiszylinder unterstromig angeordnet ist. Abgesehen von den Außengewinden 14 und 18 ist auch dieser Strömungskörper 4 rotationssymmetrisch ausgebildet. Dies gilt auch für die nachfolgend erörterten weiteren Ausführungsbeispiele.

Zu diesem Ausführungsbeispiel und auch den folgenden Ausführungsbeispielen ist der Einfachheit halber der Strömungskörper 4 ohne die Außengewinde 14 und 18 veranschaulicht. Die Strömungskörper 4 der unterschiedlichen Ausführungsbeispiele sind mit diesen Außengewinden versehen.

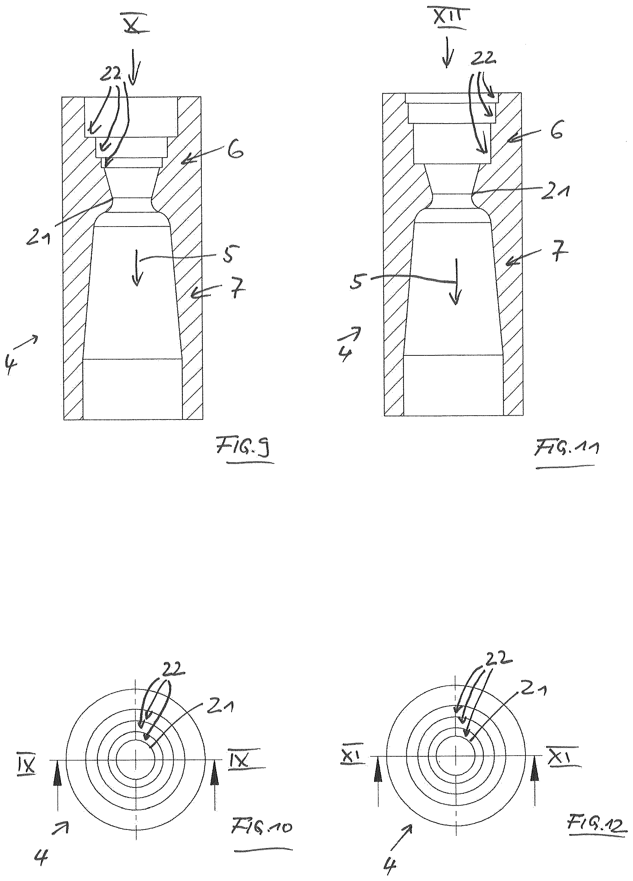

Das in den Figuren 9 und 10 veranschaulichte dritte Ausführungsbeispiel unterscheidet sich von dem zweiten Ausführungsbeispiel gemäß den Figuren 7 und 8 dadurch, dass die drei Stufen 22 unterschiedliche Stufenhöhen und unterschiedliche Stufensprünge aufweisen. So nimmt die Stufenhöhe in Durchströmungsrichtung 5 ab und auch die Stufentiefe in Durchströmungsrichtung 5 ab.

Das in den Figuren 11 und 12 veranschaulichte vierte Ausführungsbeispiel unterscheidet sich von dem zweiten Ausführungsbeispiel gemäß den Figuren 7 und 8 dadurch, dass die drei Stufen 22 unterschiedliche Stufenhöhen und unterschiedliche Stufensprünge aufweisen. So nimmt die Stufenhöhe in Durchströmungsrichtung 5 zu und auch die Stufentiefe in Durchströmungsrichtung 5 zu.

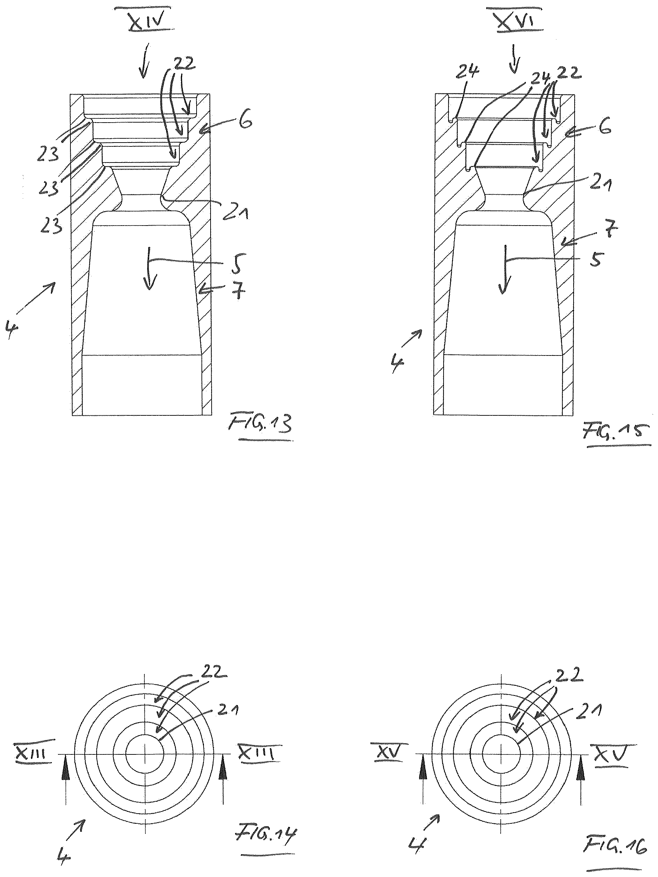

Das in den Figuren 13 und 14 veranschaulichte fünfte Ausführungsbeispiel unterscheidet sich von dem zweiten Ausführungsbeispiel gemäß den Figuren 7 und 8 dadurch, dass die drei Stufen 22 keinen Raum umschließen, der exakt die Form eines Kreiszylinders aufweist, sondern dass die Stufen 22 abgerundet ineinander übergehen. Deren Rundungsbereiche sind mit den Bezugsziffern 23 veranschaulicht.

Das in den Figuren 14 und 15 veranschaulichte sechste Ausführungsbeispiel unterscheidet sich von dem fünften Ausführungsbeispiel dadurch, dass die jeweilige bezüglich des Durchtrittskanals 3 stromaufwärtige Stufe 22 des sich verjüngenden Abschnitts 6 einen entgegen der Durchströmungsrichtung 5 gerichteten Vorsprung 24 aufweist, der die benachbart dieser Stufe 22 angeordnete stromaufwärtige Stufe 22 überlappt. Der jeweilige Vorsprung 24 ist umlaufend.

Entsprechend der grundsätzlich beschriebenen Anordnung der Stufen 22 gemäß der diversen Ausführungsbeispiele in dem sich im Querschnitt erweiternden Bereich 7 kann auch der sich im Querschnitt verjüngende Bereich 8, statt der Kurve 20, mit einer oder mehreren Stufen, beispielsweise drei Stufen versehen sein.

Die in den Figuren 17-19 gezeigte alternative Einrichtung 1 zum Behandeln von Flüssigkeiten mittels hydromechanischer Kavitation und Unterdruck, wobei diese Einrichtung 1 nur im Bereich der Wirbelkammer 2 dargestellt ist, weist zwei Zulauföffnungen 9 zur Wirbelkammer 2 und eine Auslauföffnung 12 aus der Wirbelkammer 2 auf. In die Auslauföffnung 12, dort das Innengewinde 13, wird der Strömungskörper 4, der entsprechend einem der vorstehend veranschaulichten Ausführungsbeispiele ausgeführt ist, eingeschraubt. Die Wirbelkammer 2 weist in deren Reaktorraum 10 keine Strömungsplatte 15 auf. Über die beiden identisch schräg angeordneten Einlassstutzen 8 wird die Flüssigkeit unmittelbar tangential, somit um die zentrale Achse 16 rotierend, in den Reaktorraum 10 eingegeben. Über den sich zum Auslassstutzen 11 verjüngenden Reaktorraum 10 wird die Rotationsgeschwindigkeit der Flüssigkeit im Reaktorraum 10 zu dessen Auslauföffnung 12, wie zuvor beschrieben, erhöht. Der Auslassstutzen 11 ist bei diesem Ausführungsbeispiel auf derselben Seite angeordnet wie die beiden Einlassstutzen 8. Somit erfährt die Flüssigkeit in der Wirbelkammer 2 eine Umlenkung in Richtung der zentralen Achse 16. Im Bereich der Umlenkung der Flüssigkeit wird durch einen die Wirbelkammer 2 durchsetzenden Kanal 25 Luft in die Wirbelkammer 2 im Bereich deren zentralen Stutzen 26 eingesaugt. Durch den angesaugten Luft-Sauerstoff erfolgt die sogenannte Kalt-Oxidation (Redoxreaktion) der nun vorliegenden Zell-Fragmente und beim Kavitationsprozess entstehen hochwirksame Hydroxyl-Radikale, die ebenfalls als Oxidationskomponente zur Verfügung stehen. Innerhalb des Strömungskörpers 4 entsteht Unterdruck von bis zu -1.0 bar. Der Auslaufdruck nach dem Strömungskörper 4 beträgt nur noch maximal +1.0 bar.

### Bezugszeichenliste

- 1: Einrichtung
- 2: Wirbelkammer
- 3: Durchtrittskanal
- 4: Strömungskörper
- 5: Durchströmungsrichtung
- 6: im Querschnitt verjüngender Abschnitt
- 7: im Querschnitt erweiternder Abschnitt
- 8: Einlassstutzen
- 9: Zulauföffnung
- 10: Reaktorraum
- 11: Auslassstutzen
- 12: Auslassöffnung
- 13: Innengewinde
- 14: Außengewinde
- 15: Strömungsplatte
- 16: zentrale Achse
- 17: Wandungsabschnitt

- 18: Außengewinde
- 19: Rohr
- 20: Kurve
- 21: Engstelle
- 22: Stufe
- 23: Rundungsbereich
- 24: Vorsprung
- 25: Kanal
- 26: Stutzen

## Patentansprüche

1. Einrichtung (1) zum Behandeln von Flüssigkeiten mittels hydromechanischer Kavitation und Unterdruck, wobei die Einrichtung (1) eine Wirbelkammer (2) zum rotierenden Durchleiten der in einem Zulauf der Wirbelkammer (2) unter Druck stehenden Flüssigkeit und einen sich in Durchströmungsrichtung (5) der Flüssigkeit an die Wirbelkammer (2) anschließenden, einen Durchtrittskanal (3) aufweisenden Strömungskörper (4) zur Erzeugung von Kavitation und Unterdruck aufweist, wobei der Strömungskörper (4) einen sich in der Durchströmungsrichtung (5) der Flüssigkeit durch den Strömungskörper (4) im Querschnitt verjüngenden Abschnitt (6) und einen sich an diesen Abschnitt (6) anschließenden, im Querschnitt erweiternden Abschnitt (7) aufweist, **dadurch gekennzeichnet, dass** die Erweiterung des sich erweiternden Abschnitts (7) entlang mindestens einer Stufe erfolgt, wobei sich der im Querschnitt erweiternde Abschnitt (7) stromabwärts der mindestens einen Stufe konisch erweitert.

2. Einrichtung nach Anspruch 1, **dadurch gekennzeichnet, dass** ein einen Durchtrittskanal (3) durch den Strömungskörper (4) bildender Wandungsbereich von sich im Querschnitt erweiterndem Abschnitt (7) und/oder sich im Querschnitt verjüngendem Abschnitt (6) rotationssymmetrisch zu einer Achse (16) des Strömungskörpers (4) angeordnet ist.

3. Einrichtung der Anspruch 2, **dadurch gekennzeichnet, dass** die Wandungsbereiche von sich im Querschnitt erweiterndem Abschnitt (7) und sich im Querschnitt verjüngendem Abschnitt (6) rotationssymmetrisch zu derselben Achse (16) des Strömungskörpers (4) angeordnet sind.

4. Einrichtung nach einem der Ansprüche 1-3, **dadurch gekennzeichnet, dass** die Verjüngung des sich im Querschnitt verjüngenden Abschnitts (6) entlang einer Kurve oder entlang mindestens einer Stufe (22) erfolgt.

5. Einrichtung nach Anspruch 4, **dadurch gekennzeichnet, dass** der sich im Querschnitt verjüngende Abschnitt (6), in der Durchströmungsrichtung (5) der Flüssigkeit, konisch verjüngt ausgebildet ist.

6. Einrichtung nach Anspruch 4, **dadurch gekennzeichnet, dass** die Verjüngung entlang mehrerer Stufen (22) erfolgt, vorzugsweise entlang zwei bis vier Stufen, insbesondere entlang drei Stufen erfolgt.

7. Einrichtung nach einem der Ansprüche 1-6, **dadurch gekennzeichnet, dass** der Wandungsbereich des Strömungskörpers (4), der der durch den Strömungskörper (4) fließenden Flüssigkeit zugewandt ist, im Bereich der jeweiligen Stufe (22) parallel und senkrecht zur Rotationsachse (16) angeordnet ist.

8. Einrichtung nach einem der Ansprüche 1-7, **dadurch gekennzeichnet, dass** Abstände von in Strömungsrichtung der Flüssigkeit durch den Strömungskörper (4) aufeinanderfolgenden Stufen (22) in Durchströmungsrichtung (5) gleich oder in Durchströmungsrichtung (5) zunehmend oder in Durchströmungsrichtung (5) abnehmend sind.

9. Einrichtung nach einem der Ansprüche 1-8, **dadurch gekennzeichnet, dass** die Tiefe oder radiale Erstreckung von in Durchströmungsrichtung (5) der Flüssigkeit durch den Strömungskörper (4) aufeinanderfolgenden Stufen (22) des sich im Querschnitt verjüngenden Abschnitts (6) in gleichem Maße abnehmend oder in kleinerem Maße abnehmend ist.

10. Einrichtung nach einem der Ansprüche 1-9, **dadurch gekennzeichnet, dass** mindestens eine bezüglich des Durchtrittskanals (3) stromabwärtige Stufe (22) des sich im Querschnitt verjüngenden Abschnitts (6) einen entgegen der Durchströmungsrichtung (5) gerichteten Vorsprung (24) aufweist, der die benachbart dieser Stufe (22) angeordnete stromaufwärtige Stufe (22) überlappt.

11. Einrichtung nach Anspruch 10, **dadurch gekennzeichnet, dass** der Vorsprung (24) umlaufend ist.

12. Einrichtung nach einem der Ansprüche 1-11, **dadurch gekennzeichnet, dass** eine oder mehrere Zulauföffnungen (9) zur Wirbelkammer (2) und eine Auslauföffnung (12) aus dem Strömungskörper (4) auf abgewandten Seiten der Einrichtung (1) angeordnet sind.

13. Einrichtung nach einem der Ansprüche 1-12, **dadurch gekennzeichnet, dass** eine oder mehrere Zulauföffnungen (9) zur Wirbelkammer (2) und eine Auslauföffnung (12) des Strömungskörpers (4) auf derselben Seite der Einrichtung (1) angeordnet sind.

## Claims

1. Device (1) for treating liquids by means of hydromechanical cavitation and negative pressure, wherein the device (1) has a swirl chamber (2), for through-guidance in rotation of the liquid under pressure in an inlet of the swirl chamber (2), and has a flow body (4), adjoining the swirl chamber (2) in the throughflow direction (5) of the liquid and having a passage channel (3), for generation of cavitation and negative pressure, wherein the flow body (4) has a portion (6) narrowing in cross section in the throughflow direction (5) of the liquid through the flow body (4) and has a portion (7) adjoining this portion (6) and widening in cross section, **characterized in that** the widening of the widening portion (7) is realized along at least one step, wherein the cross-sectionally widening portion (7) widens conically downstream of the at least one step.

2. Device according to Claim 1, **characterized in that** a wall region, forming a passage channel (3) through the flow body (4), of the cross-sectionally widening portion (7) and/or of the cross-sectionally narrowing portion (6) is arranged rotationally symmetrically with respect to an axis (16) of the flow body (4).

3. Device of Claim 2, **characterized in that** the wall regions of the cross-sectionally widening portion (7) and of the cross-sectionally narrowing portion (6) are arranged rotationally symmetrically with respect to the same axis (16) of the flow body (4).

4. Device according to one of Claims 1-3, **characterized in that** the narrowing of the cross-sectionally narrowing portion (6) is realized along a curve or along at least one step (22).

5. Device according to Claim 4, **characterized in that** the cross-sectionally narrowing portion (6) is of conically narrowing form in the throughflow direction (5) of the liquid.

6. Device according to Claim 4, **characterized in that** the narrowing is realized along multiple steps (22), preferably is realized along two to four steps, in particular is realized along three steps.

7. Device according to one of Claims 1-6, **characterized in that** the wall region of the flow body (4) which faces the liquid flowing through the flow body (4) is arranged parallel and perpendicularly to the axis of rotation (16) in the region of the respective step (22).

8. Device according to one of Claims 1-7, **characterized in that** spacings between steps (22) following one after the other in the flow direction of the liquid through the flow body (4) are identical in the throughflow direction (5) or increase in the throughflow direction (5) or decrease in the throughflow direction (5).

9. Device according to one of Claims 1-8, **characterized in that** the depth or radial extent of steps (22) of the cross-sectionally narrowing portion (6) that follow one after the other in the throughflow direction (5) of the liquid through the flow body (4) decreases at a constant rate or decreases at a decreasing rate.

10. Device according to one of Claims 1-9, **characterized in that** at least one step (22) of the cross-sectionally narrowing portion (6) that is downstream in relation to the passage channel (3) has a projection (24) which is directed counter to the throughflow direction (5) and which overlaps the upstream step (22) arranged adjacently to this step (22) .

11. Device according to Claim 10, **characterized in that** the projection (24) is of encircling form.

12. Device according to one of Claims 1-11, **characterized in that** one or more inlet openings (9) to the swirl chamber (2) and an outlet opening (12) from the flow body (4) are arranged on opposite sides of the device (1).

13. Device according to one of Claims 1-12, **characterized in that** one or more inlet openings (9) to the swirl chamber (2) and an outlet opening (12) of the flow body (4) are arranged on the same side of the device (1).

## Revendications

1. Dispositif (1) de traitement de liquides par cavitation hydromécanique et dépression, le dispositif (1) comportant une chambre de turbulence (2) destinée à canaliser à rotation le liquide sous pression dans une entrée de la chambre de turbulence (2) et un corps d'écoulement (4) qui est destiné à générer une cavitation et une dépression, qui est contigu à la chambre de turbulence (2) dans le sens d'écoulement (5) du liquide et qui comporte un canal de passage (3), le corps d'écoulement (4) comportant une portion (6) qui se rétrécit en coupe transversale dans le sens d'écoulement (5) du liquide à travers le corps d'écoulement (4) et une portion (7) qui est contigüe à cette portion (6) et qui s'élargit en coupe transversale, **caractérisé en ce que** l'élargissement de la portion (7) qui s'élargit s'effectue le long d'au moins un gradin, la portion (7) qui s'élargit en coupe transversale s'élargissant en cône en aval de l'au moins un gradin.

2. Dispositif selon la revendication 1, **caractérisé en ce qu'**une zone de paroi, qui forme un canal de passage (3) à travers le corps d'écoulement (4) et qui part d'une portion (7) qui s'élargit en coupe transversale et/ou d'une portion (6) qui se rétrécit en coupe transversale, est disposée à symétrie de rotation par rapport à un axe (16) du corps d'écoulement (4).

3. Dispositif selon la revendication 2, **caractérisé en ce que** les zones de paroi qui partent de la portion (7) qui s'élargit en coupe transversale et de la portion (6) qui se rétrécit en coupe transversale sont disposées à symétrie de rotation par rapport au même axe (16) du corps d'écoulement (4).

4. Dispositif selon l'une des revendications 1 à 3, **caractérisé en ce que** le rétrécissement de la portion (6) qui se rétrécit en coupe transversale s'effectue le long d'une courbe ou le long d'au moins un gradin (22).

5. Dispositif selon la revendication 4, **caractérisé en ce que** la portion (6) qui se rétrécit en coupe transversale est conçue pour se rétrécir en cône dans le sens d'écoulement (5) du liquide.

6. Dispositif selon la revendication 4, **caractérisé en ce que** le rétrécissement s'effectue le long de plusieurs gradins (22), de préférence le long de deux à quatre gradins, notamment le long de trois gradins.

7. Dispositif selon l'une des revendications 1 à 6, **caractérisé en ce que** la zone de paroi du corps d'écoulement (4) est dirigée vers le liquide qui s'écoule à travers le corps d'écoulement (4), et est disposée parallèlement et perpendiculairement à l'axe de rotation (16) dans la zone du gradin respectif (22).

8. Dispositif selon l'une des revendications 1 à 7, **caractérisé en ce que** les distances entre les gradins (22) qui se succèdent dans le sens d'écoulement du liquide à travers le corps d'écoulement (4) sont égales dans le sens d'écoulement (5) ou augmentent dans le sens d'écoulement (5) ou diminuent dans le sens de l'écoulement (5).

9. Dispositif selon l'une des revendications 1 à 8, **caractérisé en ce que** la profondeur ou l'étendue radiale de gradins (22) qui se succèdent dans le sens d'écoulement (5) du liquide à travers le corps d'écoulement (4) de la portion (6) qui se rétrécit en coupe transversale augmente dans la même mesure ou diminue dans une moindre mesure.

10. Dispositif selon l'une des revendications 1 à 9, **caractérisé en ce qu'**au moins un gradin (22), en aval du canal de passage (3), de la portion (6) qui se rétrécit en coupe transversale comporte une saillie (24) qui est dirigée à l'opposé du sens d'écoulement (5) et qui chevauche le gradin amont (22) adjacent à ce gradin (22).

11. Dispositif selon la revendication 10, **caractérisé en ce que** la saillie (24) est circonférentielle.

12. Dispositif selon l'une des revendications 1 à 11, **caractérisé en ce qu'**une ou plusieurs ouvertures d'entrée (9) de la chambre de turbulence (2) et une ouverture de sortie (12) du corps d'écoulement (4) sont disposées sur des côtés opposés du dispositif (1).

13. Dispositif selon l'une des revendications 1 à 12, **caractérisé en ce qu'**une ou plusieurs ouvertures d'entrée (9) de la chambre de turbulence (2) et une ouverture de sortie (12) du corps d'écoulement (4) sont disposées du même côté du dispositif (1).
